# EUROPEAN PATENT APPLICATION

(11) **EP 2 180 669 A1**
(43) Date of publication of application: **28.04.2010**
(21) Application number: 09006100.3
(22) Date of filing: 05.05.2009
(51) Int. Cl.: H04M 1/02

(54) **Slide hinge module for mobile phone with built-in keybad**

(30) Priority: 22.10.2008 KR 20080103606; 11.03.2009 KR 20090020756
(71) Applicant: Hanbit Precision Co., Ltd., Uiwang-si, Gyeonggi-do (KR)
(72) Inventor: Lee, Geun Ju, Anyang-si Gyeonggi-do (KR)
(74) Representative: Sawodny, Michael-Wolfgang

(57) **Abstract**

The slide hinge module for a mobile phone with a built-in keypad is disclosed, which is used in a portable terminal including a first body having a keypad, and a second body which slides and be opened or closed in a left or right direction when viewing from a front side of the first body and has a display screen part on its front side, comprises a moving plate which is fixedly engaged to the first body; a fixing plate of which a front side is fixedly engaged to the second body, and a backside is flat on the same plane, and which slides in left and right directions along with the moving plate; and an elastic apparatus which provides an elastic force so that the moving plate can stay in a left or right side of the fixing plate.

## Description

### TECHNICAL FIELD

The present invention relates to a slide hinge module, and in particular to a slide hinge module used in a mobile phone with a built-in keypad which is light and has an easy operation by improving a surface shape exposed to the outside in a slide hinge module engaged to a mobile phone and by making an elastic force be applied symmetrically in upper and lower directions.

### BACKGROUND ART

As a wireless communication technology advances, a mobile phone has been equipped with more multiple functions. The mobile phone might be generally classified into a flip type, a folder type and a slide type.

In recent years, a mobile phone is equipped with various functions such as an audio communication function, an e-mail service function, an internet connection function, a photographing function, a game or something. A mobile phone with a keypad of a QWERTY keypad arrangement like a keyboard of a computer is developed in order to effectively use the above diverse and composite functions.

Here the QWERTY keypad is designed with its horizontal length being longer than a vertical length. The QWERTY keypad is opened and closed as a cover horizontally slides in a left and right direction whereas a numeral pad of a body in a conventional mobile phone is opened and closed as a cover slides upward and downward.

Almost mobile phones are slide-opened in order to expose a QWERTY keypad which is arranged in multiple rows. For a slide operation of a mobile phone, a slide apparatus is needed. Part of a slide apparatus is exposed from a backside of a mobile phone in a slide open mode for exposing a QWERTY keypad to the outside. In particular, relatively larger part of a guide rail or a guide groove is exposed to the outside in a conventional slide apparatus. A space needed for disposing an elastic member for performing a semi-automatic operation in a slide mode might make an outer appearance look worse.

At this time, an external force is applied to one side of a cover in order to slide a cover. Since the width of a cover is wider as compared to its length by assuming that a left and right sliding direction of a cover is a longitudinal direction, a cover might be hurt when it rotates about a hinge and is distorted.

As a mobile phone having diverse functions and a larger screen part for showing larger images and pictures are demanded, the size of a mobile phone increases, which leads to increasing the weight of a mobile phone. So, a new slider apparatus, which can be well applied to the above mobile phone, is urgently needed.

When a torsion spring is used as a spring hinge like in a conventional art, an assembling and disassembling work might be complicated along with problems, which might cause foreign substances to be inserted into a coil part of a torsion spring when a mobile phone is used for a long time, by means of which a sliding operation feels bad, and in worse case a sliding work might be dead. When a spring casing with a compression spring is used, one-piece casing or two-piece upper and lower casings are used so as to prevent an escape of a compression spring. In which case, a terminal might be not compact sized due to an increase of a thickness of a spring casing. As the number of parts used increases, an assembling work might be prolonged.

### DISCLOSURE OF THE INVENTION

Accordingly, it is an object of the present invention to provide a slide hinge module used in a mobile phone with a built-in keypad which is advantageously light and has an easy operation by improving a surface shape exposed to the outside in a slide hinge module engaged to a mobile phone and making an elastic force be applied symmetrically in upper and lower directions.

To achieve the above objects, there is provided a slide hinge module for a mobile phone with a built-in keypad, which is used in a portable terminal including a first body having a keypad, and a second body which slides and be opened or closed in a left or right direction when viewing from a front side of the first body and has a display screen part on its front side, comprising a moving plate which is fixedly engaged to the first body; a fixing plate of which a front side is fixedly engaged to the second body, and a backside is flat on the same plane, and which slides in left and right directions along with the moving plate; and an elastic apparatus which provides an elastic force so that the moving plate can stay in a left or right side of the fixing plate.

### EFFECTS

The present invention has the following advantages.

First, an outer appearance of a mobile terminal looks better by making the exposed parts of a slide hinge module have the same and uniform surfaces when a mobile phone is slide opened in left and right directions.

Second, an opening and closing operation of a mobile terminal operates better, and a wider range of weight can be selected in the products by symmetrically disposing an elastic apparatus in upper and lower directions.

Third, a uniform weight can be transferred when opening and closing a mobile terminal with the helps of an elastic apparatus arranged in upper and lower directions, and a slide hinge module can be supported at two points, so a biased support can be prevented, by means of which any damages due to a biased concentration at a certain portion can be avoided in a mobile phone.

### BRIEF DESCRIPTION OF THE DRAWINGS

The present invention will become better understood with reference to the accompanying drawings which are given only by way of illustration and thus are not limitative of the present invention, wherein;

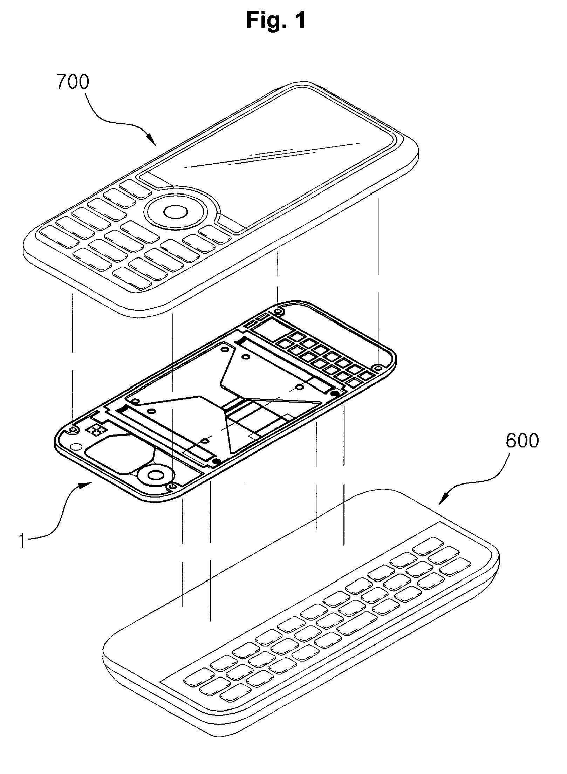

Figure 1 is a disassembled perspective view illustrating a mobile phone which uses a slide hinge module according to an embodiment of the present invention;
Figures 2A and 2B are front and rear views illustrating a slide hinge module according to a first embodiment of the present invention;
Figures 3A and 3B are disassembled perspective views illustrating a slide hinge module of Figures 2A and 2B;
Figure 4A and 4B are front and rear views illustrating a slide hinge module according to a second embodiment of the present invention;
Figure 5A and 5B are disassembled perspective views illustrating a slide hinge module according to a third embodiment of the present invention;
Figure 6 is a perspective view illustrating an elastic apparatus according to first through third embodiment of the present invention;
Figure 7 is a disassembled perspective view illustrating an elastic apparatus of Figure 6; and
Figures 8A, 8B and 8C are views of a sliding state of a slide hinge module of Figures 2A through 5B.

### MODES FOR CARRYING OUT THE INVENTION

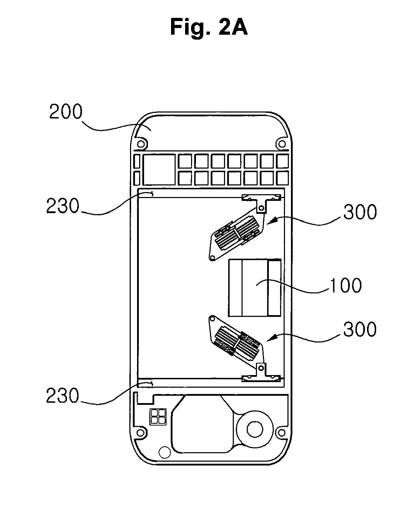

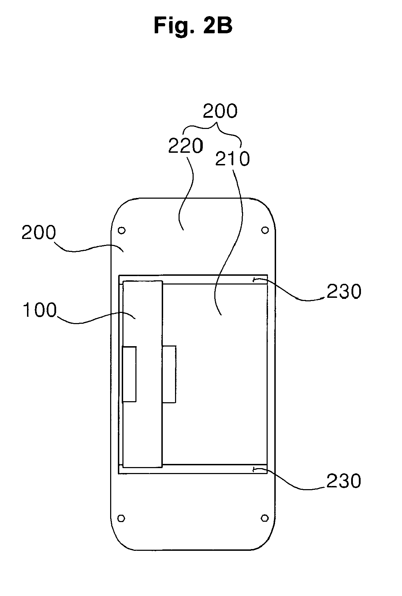

Figures 2A and 2B are front and rear views illustrating a slide hinge module according to a first embodiment of the present invention.

The slide hinge module 1 for a mobile phone with a built-in keypad, which is used in a portable terminal including a first body 600 having a keypad, and a second body 700 which slides and be opened or closed in a left or right direction when viewing from a front side of the first body 600 and has a display screen part on its front side, comprises a moving plate 100 which is fixedly engaged to the first body 600; a fixing plate 200 of which a front side is fixedly engaged to the second body 700, and a backside is flat on the same plane, and which slides in left and right directions along with the moving plate 100; and an elastic apparatus 300 which provides an elastic force so that the moving plate 100 can stay in a left or right side of the fixing plate 200.

The present invention relates to a slide hinge module for a mobile phone with a built-in keypad. Here the mobile phone with a built-in keypad means a mobile phone which slides in left and right directions, not in upward and downward directions like a conventional mobile phone which is equipped with a QWERTY keypad.

For a clarification of the descriptions, the directions are defined as a mobile phone is being laid with its front side facing upward. Namely, a display part of a mobile phone faces upward.

The mobile phone with a built-in keypad according to the present invention comprises a first body 600, and a second body 700 which is equipped with a display part. The second body 700 slides in left and right directions with respect to the first body 600 and is opened or closed.

The moving plate 100 is fixedly engaged to the first body 600 and slides along with the first body 600. The moving plate 100 is formed of a thin plate shape. The moving plate 100 is engaged from a front side of the first body 600 while keeping a space from the portion where the keypad is disposed.

The fixing plate 200 is fixedly engaged to the second body 700 and is engaged to the whole portions of the backside of the second body 700. The front side of the fixing plate 200 is engaged to the second body 700, and the moving plate 700 is engaged to its backside. The backside of the fixing plate 200 is exposed to the outside when the keypad slides and is opened.

In this case, the moving plate 100 is covered by means of the first body 600 while not being exposed to the outside. Only the backside of the fixing plate 200 is exposed. The fixing plate is formed in a flat shape on the same plane without having any concave or convex portions except for the guide groove 230, which leads to a uniform and clean backside of the mobile phone for thereby making an outer structure look better. The slide hinge module 1 is formed in the interior of the mobile phone, so foreign substances can be prevented from being inputted while preventing damages.

The elastic apparatus 300 is configured for a semi-automatic operation when the moving plate 100 slides along with the fixing plate 200. The elastic apparatus 300 provides an elastic force by means of which the moving plate 100 can stay at the left side or right side of the fixing plate 200, so the mobile phone can be fully opened or closed except for the dead point.

A pair of elastic apparatuses 300 is provided in the slide hinge module 1 for a mobile phone according to a preferred embodiment of the present invention. The elastic apparatuses 300 are symmetric in upper and lower directions.

Namely the elastic apparatuses 300 are symmetric with respect to the line drawn in the left and right directions from the center of the mobile phone. The mobile phone according to the present invention is formed in a vertically longitudinal direction. When only one elastic apparatus 300 is provided, the following problems might occur.

In the present invention, the elastic apparatus 300 is configured for allowing the first body 600 and the second body 700 to slide in a semi-automatic method, not in a simple slide operation. For the above semi-automatic operation, one side of the elastic apparatus 300 is connected to the first body 600, and the other side of the same is connected to the second body 700 for thereby obtaining an elastic operation. Two points connected are not formed on the same line as a sliding direction. One side of the same is positioned in an upper side or lower side of the other side of the same. When only one elastic apparatus 300 is provided, it is impossible to transfer the uniform weights to the portions where the first body 600 or the second body 700 is connected or to the guiding portions where are used for guiding a sliding operation. In this case, the weight might be concentrated on a sliding portion, which leads to a damage of the mobile phone. In the present invention, a pair of the elastic apparatuses 300 is symmetrically formed in the upper and lower directions. So, when the mobile phone is opened or closed, the weights concentrated on the connected portions of the elastic apparatuses 300 or the sliding portions can be uniformly distributed.

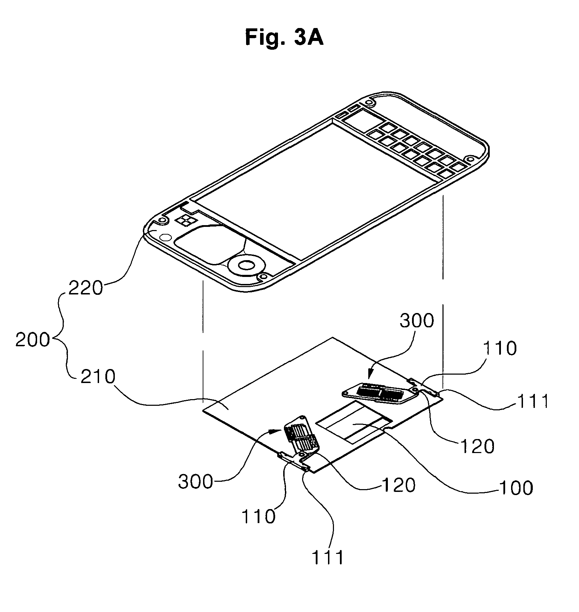

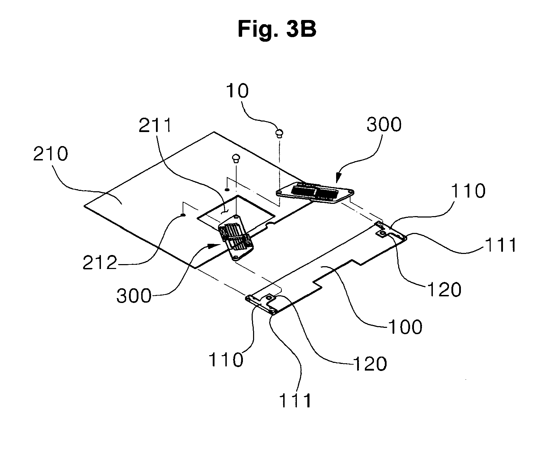

Figures 3A and 3B are disassembled perspective views illustrating a slide hinge module of Figures 2A and 2B.

In the slide hinge module 1 for a mobile phone with a built-in keypad according to a preferred embodiment of the present invention, the moving plate 100 is positioned in a backside of the fixing plate 200, and a guide part 110 is disposed in upper and lower ends of the same, and an engaging part 120 is extended from each guide part 110, and the fixing plate 200 is formed of a fixing plate 210 of which upper and lower ends are inserted into the guide parts 110, and a fixing frame 220 which surrounds the fixing plate 210, and the fixing plate 210 is formed of two guide grooves 230 so that the inner rims of the fixing frame 220 are not closer to the upper and lower ends of the fixing plate 200.

The moving plate 100 is positioned in a backside of the fixing plate 100 and is engaged to the fixing plate 200. A guide part 110 is disposed in the upper and lower side ends of the moving plate 100, respectively, and the moving plate 100 is engaged to the fixing plate 200 by means of the guide part 110.

The guide part 110 is integrally bent from the upper and lower side ends of the moving plate 100. A reinforcing part 111 might be disposed in the portion where the upper and lower side ends of the fixing plate 210 are inserted and contact in the guide part 110. The reinforcing part 111 is inwardly fixed from the guide part 110 for guiding the fixing plate 200 in the slide opening and closing modes. The reinforcing part 111 is made of a synthetic resin material for thereby preventing frictions and abrasions of the moving plate 100 and the fixing plate 210.

The engaging part 120 is integrally extended from an end of the guide part 110 and is engaged with the elastic apparatus 300 while being rotatable. The engaging part 120 connects the moving plate 100 and the elastic apparatus 300.

The fixing plate 210 is an element to be connected with the moving plate 100 while occupying the center portion of the fixing plate 200. The upper and lower ends of the fixing plate 210 are inserted into the guide part 110 in which the reinforcing part 111 is formed and are connected with the moving plate 100. The fixing plate 210 is formed while matching with the size of the moving plate 100, so a certain gap is not formed except in the sliding direction. The fixing plate 210 has a uniform height in the left and right directions.

The fixing frame 220 is engaged with the fixing plate 210 while belonging to the fixing plate 200. The fixing frame 220 surrounds the fixing plate 210 while being closer to the left and right sides of the fixing plate 210, but not being closer to the upper and lower sides of the fixing plate 210. The guide groove 230 is formed in the fixing plate 200. The guide part 110 is engaged to the fixing plate 210 and slides in the left and right directions along the guide groove 230.

The guide groove 230 is formed with a certain depth which is determined not to interfere with the sliding operation in consideration with the heights of the guide part 110 and the reinforcing part 111. It is preferred that the guide groove 230 has a possibly narrowest width.

In the embodiment of the present invention, the elastic apparatus 300 is disposed in the front side of the fixing plate 210 with its one side being rotatably engaged to the engaging part 120, and its other side being rotatably engaged to a center of the fixing plate 210.

The elastic apparatus 300 is disposed in a front side of the fixing plate 210.

The elastic apparatus 300 is a means for allowing the first body 600 and the second body 700 to operate in a semi-automatic method, not in a simple sliding operation. The elastic apparatus 300 is connected with the first body 600 and the second body 700. The construction corresponding to the elastic apparatus 300 is generally positioned in a backside of the construction corresponding to the fixing plate 200 for a simplified structure of the slide hinge module 1. In this case, a certain space for an operation of the elastic apparatus 300 is needed. When the elastic apparatus 300 is positioned in the backside of the fixing plate 210, a sliding operation is performed in a state that the first body 600 and the second body 700 are contacted, so a concave part should be formed in the backside of the fixing plate 200 for an operation of the elastic apparatus 300. The above concave part is exposed to the outside when the backside of the fixing plate 200 is exposed as the mobile phone slides and is opened. The above concave part might interfere with a better-looking appearance of the mobile phone. In addition, a certain foreign substance might be inputted into a gap formed surrounding the concave portion, which leads to an error of the mobile phone.

In order to overcome the above problems, the elastic apparatus 300 is positioned in a front side of the fixing plate 210.

The elastic apparatus 300 is configured with its one side being engaged to the engaging part 120, and its other side being engaged to the fixing plate 210, respectively. The elastic apparatus 300 is provided in one pair. One of the elastic apparatus 300 is engaged to the engaging part 120 formed in the upper side of the moving plate 100, and the other one of the same is engaged to the engaging part 120 formed in the lower side of the moving plate 100. The other side of the former element is engaged to a slightly upper portion of the center of the fixing plate 210, and the other side of the later element is engaged to a slightly lower portion of the fixing plate 210. The elastic apparatus 300 can be elastically transformed while providing a certain external force by means of which the moving plate 100 can stay in the left side or the right side with respect to the fixing plate 200. So the first body 600 and the second body 700 can slide in a semi-automatic method.

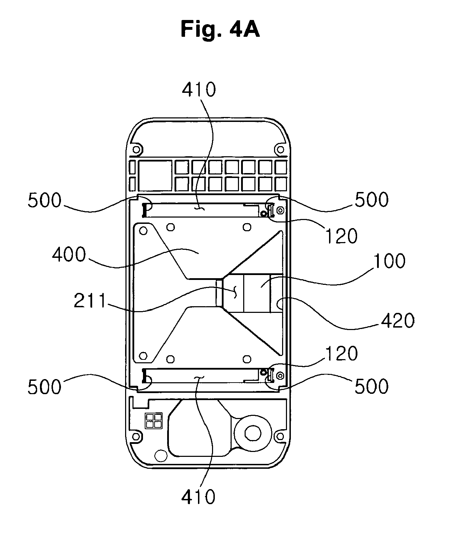

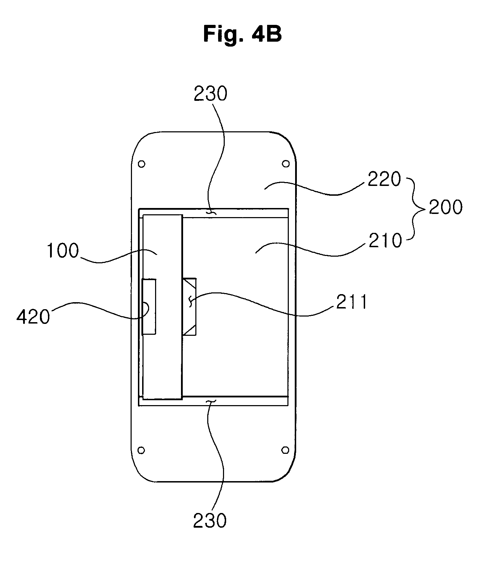

Figures 4A and 4B are front and rear views illustrating a slide hinge module according to a second embodiment of the present invention.

In the above embodiment of the present invention, a cover plate 400 is engaged to a front side of the fixing plate 200 for covering the elastic apparatus 300.

A cut-away groove 410 is formed in the upper and lower sides of the cover plate 400 in left and right directions for exposing the engaging part 120. A damper 500 is engaged to left and right ends of each cut-away groove 410.

The cover plate 400 is positioned in a front side of the fixing plate 200 while covering the elastic apparatus 300. The cover plate 400 is fixedly engaged with the fixing plate 200 while separating the second body 700 and the elastic apparatus 300. The cover plate 400 is slightly curved along its rim so that an end of the same can be engaged to the fixing plate 200, and a certain space is formed in its center portion for not interfering with an operation of the elastic apparatus 300.

A cut-away groove 410 is formed in the upper and lower sides of the cover plate 400 for checking a sliding operation of the engaging part 120 which forms the upper and lower ends of the moving plate 100. The damper 500 is fixedly engaged to the left and right ends of the cut-away groove 120 for supporting the movement of the engaging part 120. A sliding section in the left and right directions of the moving plate 100 with respect to the fixing plate 200 is determined with the helps of the cut-away groove 410 and the damper 500. The above construction is determined based on the sizes of the mobile phone according to the present invention. The damper 500 supports the movement of the moving plate 100 and absorbs a certain impact occurring as the moving plate 100 slides. The moving plate 100 is accelerated by means of the elastic apparatus 300 in the sliding mode. When the moving plate 100 stops at the left and right sides of the fixing plate 200, a relatively large impact might occur, which impact can be absorbed by means of the damper 500. So the damper 500 is preferably made of a certain material such as rubber, urethane or something which can absorb impacts.

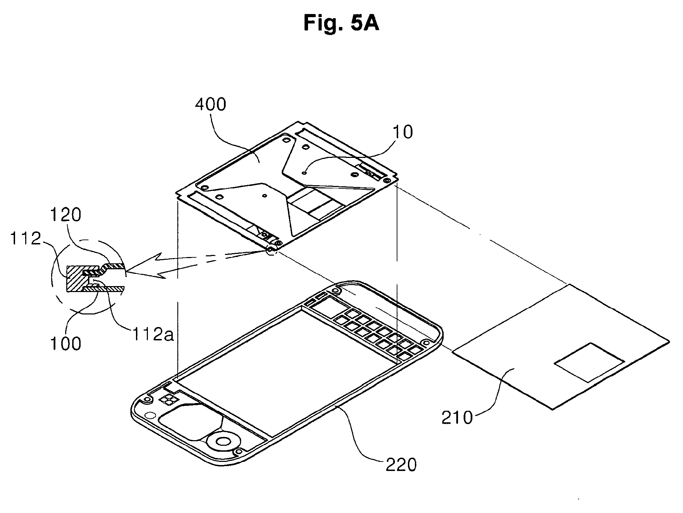

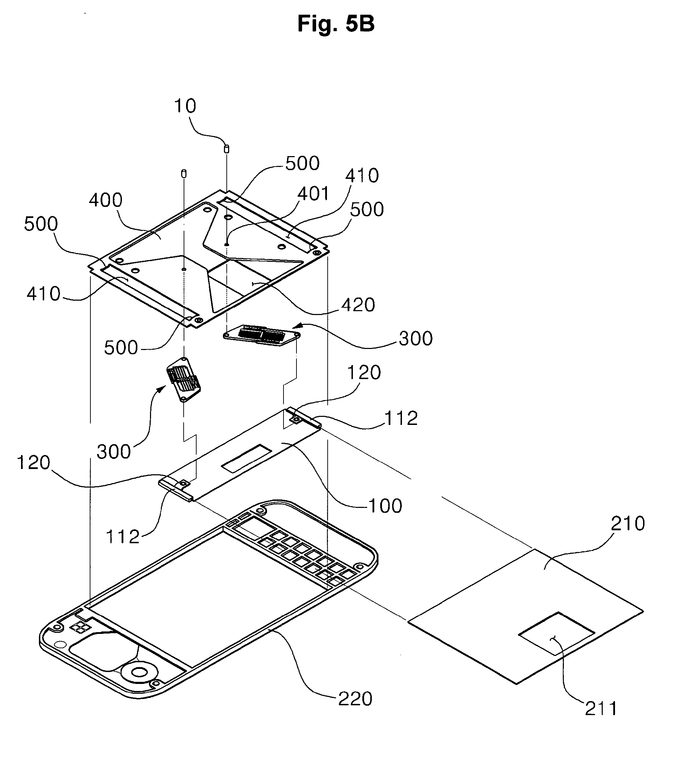

Figures 5A and 5B are disassembled perspective views illustrating a slide hinge module according to a third embodiment of the present invention.

One side of the elastic apparatus 300 is rotatably engaged to the engaging part 120. In this matter, the above third embodiment is the same as the first and second embodiments of the present invention. However, the other side of the elastic apparatus 300 is rotatably engaged to the cover plate 400. In this matter, the third embodiment is different from the first and second embodiments of the present invention.

In the third embodiment, one side of the elastic apparatus 300 is engaged to the engaging part 120, and the other side of the same is engaged to the cover plate 400. The elastic apparatus 300 is provided in one pair like in the first and second embodiments. One of the elastic apparatuses is engaged to the engaging part formed in the upper side of the moving plate 100, and the other one of the same is engaged to the engaging part 120 formed in a lower side of the moving plate 100. The other side of the former element is engaged to a slightly upper portion of the center of the cover plate 400, and the other side of the same is engaged to a slightly lower portion of the center of the cover plate 400.

As shown in Figure 5B, the other side of the elastic apparatus 300 might be engaged to the cover plate 400 by suing a fixing member such as a rivet 10.

In the present invention, the elastic apparatus 300 is engaged to the cover plate 400, not to the fixing plate 210, so it is possible to make the mobile phone to look better. The detailed descriptions are as follows.

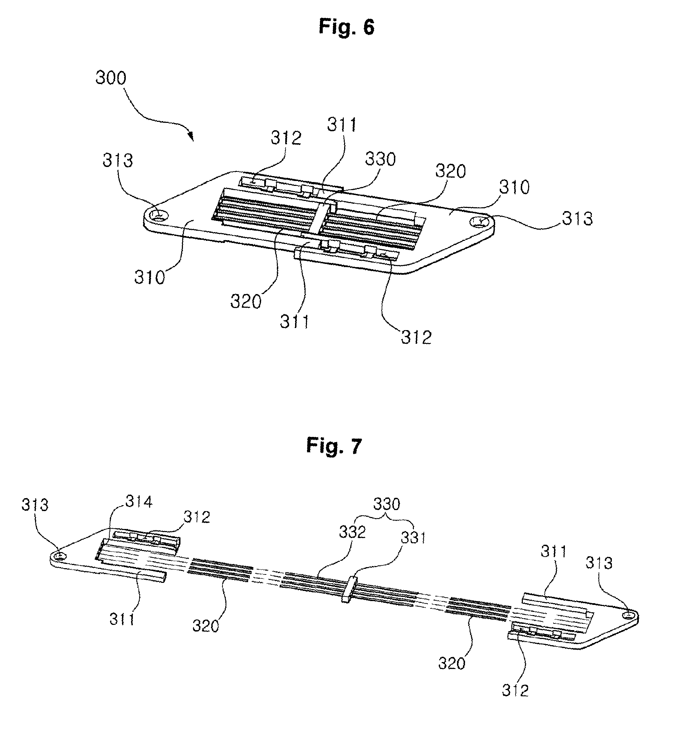

In the first and second embodiments of the present invention, the other side of the elastic apparatus 300 is engaged with the fixing plate 210. In this case, it is engaged using a fixing member such as a rivet 10(Figure 3B) through a fixture 313(Figures 6 and 7). At this time, an engaging hole 212(Figure 3B) might be formed in the fixing plate 210 for an engagement using a fixing member. When the fixing member is engaged through the engaging hole 212, an end of the fixing member might be exposed through the backside of the fixing plate 210.

In this case, the second body 700 slides with respect to the first body 600. When the backside of the fixing plate 200, namely, the backside of the fixing plate 210 is exposed through the backside of the second body 700, the ends of the engaging hole 212 and the fixing member are exposed all together, which might make an outer appearance of the mobile phone look bad.

In the present invention, the other side of the elastic apparatus 300 is engaged to the cover plate 400, not to the fixing plate 210, and namely, it is engaged using the rivet 10 through the engaging hole 401 formed in the cover plate 400. So, it is not needed to form the engaging hole 212 in the fixing plate 210 like in the first and second embodiments. The exposed backside of the fixing plate 210 is made clean and uniform, so it is possible to make an outer appearance of the mobile phone look better when the mobile phone slides and is opened.

As shown in Figure 5B, another example of the guide part 110, which was described early in the first and second embodiments, is provided.

In the present embodiment, the guide part 10 is not integrally bent from the upper and lower ends of the moving plate 100, but the guide body 112 made of a synthetic resin material is engaged to the upper and lower ends of the moving plate 100, respectively. A groove 112a is formed in an inner side of the guide body 112, so the upper and lower ends of the fixing plate 210 can slide in an inserted state. The engaging part 120 is engaged from an upper side of the guide body 112 and is extended from the guide body 112.

Since the guide part 110 is formed as having engaged with the guide body 112 made of a plastic material, it is possible to minimize the noises which might occur due to the frictions of the guide part 110, and a sliding operation might feel better.

Figure 6 is a perspective view illustrating an elastic apparatus according to the first and third embodiments of the present invention.

In the slide hinge module for a mobile phone with a built-in keypad according to a preferred embodiment of the present invention, the elastic apparatus 300 comprises a pair of opposite elastic bodies 310, a spring 320 which is positioned in an inner side of the elastic bodies 310 for allowing the elastic bodies 310 to be widened, and a support frame 330 for allowing the spring 320 to stay in the interior of the elastic bodies 310. A slide bar 311 is formed in one side of each elastic body 310, and a slide groove 312 is formed in the other side of the same for a slide engagement.

A fixture 313 is formed in each elastic body 310 for an engagement with the engaging part 120 and the fixing plate 200(in detail, the fixing plate 210 in the first and second embodiments, and the cover plate 400 in the third embodiment). The fixture 313 is formed in the upper most portion or the lower most portion of the elastic body 310 in the whole rotation sections of the elastic apparatus 300.

The elastic body 310 is divided into two parts and becomes engaged for being one body. One of the elastic bodies 310 is equipped with a slide bar 311, and the other one of the same is equipped with a slide groove 312. The slide bar 311 and the slide groove 312 are correspondingly formed in the other one of the elastic bodies 310. The slide bar 311 and the slide groove 312 correspond with each other, so one of the elastic bodies 310 can be slide-engaged with the other one of the same. The entire length of the elastic apparatus 300 can change as the elastic bodies 310 slide. The elastic bodies 310 are supported as the slide bar 311 and the slide grooves 312 are supported with each other at both sides of the same, which leads to a stable sliding operation. When an external force is continuously applied in the slide direction of the elastic apparatus 300, the elastic apparatus 300 might be damaged. In the present invention, the portions to be guided are formed in both sides of the elastic bodies 310, so a more stable operation can be obtained. Since the elastic apparatus 300 are provided in two, it is possible to effectively distribute the weights.

The spring 320 is positioned in the inner sides of the elastic bodies 310 for allowing the elastic bodies 310 to be pushed outwardly.

The support frame 330 supports the spring 320 for thereby preventing the spring 320 from being escaped to the outsides of the elastic bodies 310.

A fixture 313 is formed in the elastic bodies 310, respectively, for engaging with the engaging part 120 and the fixing plate 200(in detail, the fixing plate 210 in the first and second embodiments, and the cover plate 400 in the third embodiment). Two fixtures 313 are formed in a pair of the elastic bodies 310. One elastic body 310 is engaged to the engaging part 120, and the other elastic body 130 is engaged to the fixing plate 210(in case of the first and second embodiments) or the cover plate 400(incase of the third embodiment).

The fixtures 313 are formed in the upper most or lower most portion of the elastic body 310 in the whole sections in which the engaging part 120 and the fixing plate 200(in detail, the fixing plate 210 in the first and second embodiments, and the cover plate in the third embodiment) are engaged and rotate. The ends of both longitudinal sides of the elastic bodies 310 are formed in sharp shapes or in diamond shapes, so the fixture 313 is formed in both longitudinal ends of the elastic bodies 300. The engaging part 120 and the guide part 110 are formed above the elastic apparatus 300, and through holes 211 and 420 are formed below the elastic apparatuses 300. The through holes 211 and 420 are passages for passing cables which connect the first body 600 and the second body 700. The through holes are necessary elements in the present invention. When the elastic apparatus 300 interferes with the cables which pass through the guide part 110 or the through holes 211 and 420, a sliding operation of the mobile phone cannot happen. So the fixture 313 is positioned in the upper most or lower most portion of the elastic apparatus 300 all the time in order to prevent the above problems.

Figure 7 is a disassembled perspective view illustrating an elastic apparatus shown in Figure 6.

In the slide hinge module 1 for a mobile phone with a built-in keypad according to a preferred embodiment of the present invention, the spring 320 is a coil spring 320 and is disposed as being divided into two parts with respect to the support frame 330. The support frame 330 includes a boundary part 331 which defines a boundary of the divided springs 320, and a support rod 332 inserted into the spring 320 for supporting the spring 320.

The spring 320 is formed of a coil spring 320. More preferably, it is formed in multiple numbers as being disposed in the interior of the elastic bodies 310. The coil spring 320 has an excellent recovery force while providing an elastic force to the elastic apparatuses 300. The spring 320 is formed in about 1∼2mm sizes which is not larger than the thickness of the elastic apparatus 300. The spring 320 is divided into two parts like the elastic bodies 310, and the springs 320 are connected with the elastic bodies 310 by means of the support frame 330.

A boundary part 331 is formed in the center of the support frame 330, and a support rod 332 is inserted into the spring 320 from the both sides of the boundary part 331. The support rod 322 prevents an escape of the spring 320, with an end of the support rod being inserted into the insertion hole 314 of the elastic body 310. The insertion hole 314 is inserted into the elastic body 310. In a state that the spring 320 is compressed, part of the end of the support rod 332 is protruded from the elastic body 310.

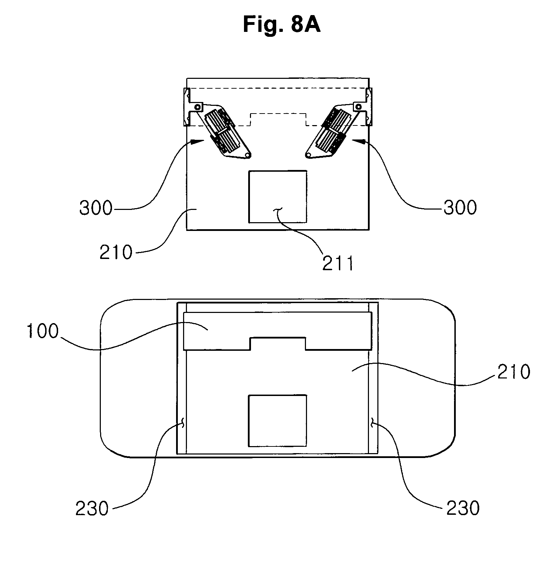

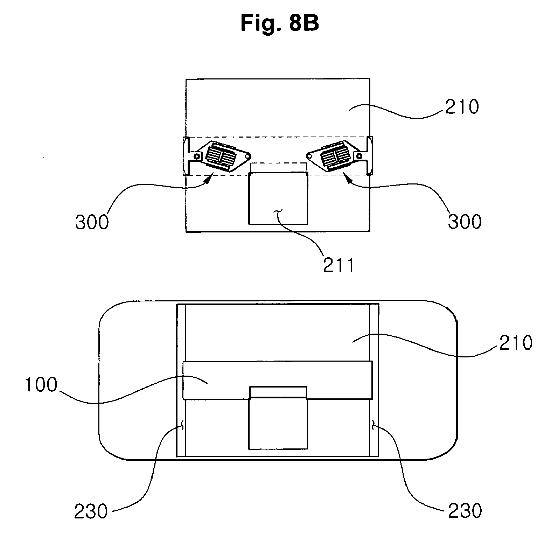

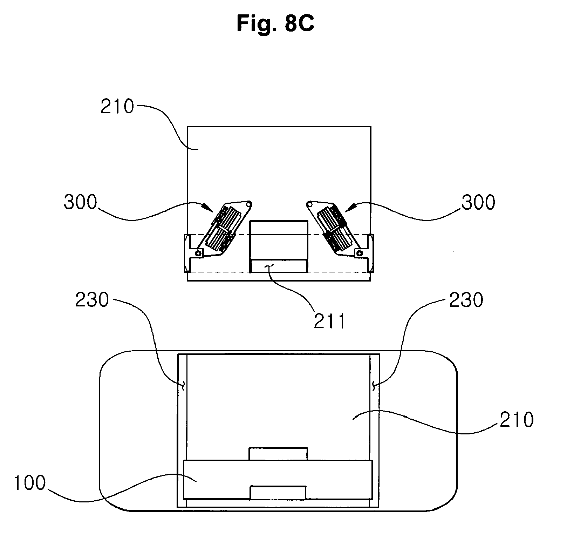

Figures 8A, 8B and 8C are views illustrating a state that the moving plate 100 of the slide hinge module of Figures 2A through 5B slide from one side of the fixing plate 210 to the other side of the same along the guide groove 230.

As the present invention may be embodied in several forms without departing from the spirit or essential characteristics thereof, it should also be understood that the above-described examples are not limited by any of the details of the foregoing description, unless otherwise specified, but rather should be construed broadly within its spirit and scope as defined in the appended claims, and therefore all changes and modifications that fall within the meets and bounds of the claims, or equivalences of such meets and bounds are therefore intended to be embraced by the appended claims.

## Claims

1. A slide hinge module for a mobile phone with a built-in keypad, which is used in a portable terminal including a first body having a keypad, and a second body which slides and be opened or closed in a left or right direction when viewing from a front side of the first body and has a display screen part on its front side, comprising:
a moving plate which is fixedly engaged to the first body;
a fixing plate of which a front side is fixedly engaged to the second body, and a backside is flat on the same plane, and which slides in left and right directions along with the moving plate; and
an elastic apparatus which provides an elastic force so that the moving plate can stay in a left or right side of the fixing plate.

2. The module of claim 1, wherein said elastic apparatus is provided in one pair which is symmetric in upper and lower directions.

3. The module of claim 2, wherein said moving plate is positioned in a backside of the fixing plate, and a guide part is disposed in upper and lower ends of the same, and an engaging part is extended from each guide part, and said fixing plate is formed of a fixing plate of which upper and lower ends are inserted into the guide parts, and a fixing frame which surrounds the fixing plate, and said fixing plate is formed of two guide grooves so that the inner rims of the fixing frame are not closer to the upper and lower ends of the fixing plate, and said elastic apparatus is positioned in a front side of the fixing plate, with one side of the elastic apparatus being rotatably engaged to the engaging part, and with the other side of the same being rotatably engaged to the center of the fixing plate.

4. The module of claim 3, further comprising a cover plate which is engaged to a front side of the fixing plate while covering the elastic apparatus.

5. The module of claim 2, wherein said moving plate is positioned in a backside of the fixing plate, and a guide part is disposed in upper and lower ends of the same, and an engaging part is extended from each guide part, and said fixing plate is formed of a fixing plate of which upper and lower ends are inserted into the guide parts, a fixing frame which surrounds the fixing plate, and a cover plate engaged to a front side of the fixing plate, and said fixing plate is formed of two guide grooves so that the inner rims of the fixing frame are not closer to the upper and lower ends of the fixing plate, and said elastic apparatus is positioned in a front side of the fixing plate and is covered by means of the cover plate, with one side of the elastic apparatus being rotatably engaged to the engaging part, and with the other side of the same being rotatably engaged to the center of the fixing plate.

6. The module of either claim 4 or claim 5, wherein a cut-away groove is formed in the upper and lower sides of the cover plate longitudinally in left and right directions for thereby exposing the engaging part to the outside, and a damper is engaged to the left and right ends of each cut-away groove, respectively.

7. The module of one among claims 3 through 5, wherein said elastic apparatus includes a pair of opposite elastic bodies which are engaged with each other, a spring which is disposed in the inner side of the elastic bodies for allowing the elastic bodies to be widened, and a support frame for allowing the spring to stay in the inner side of the elastic bodies, and a slide bar is formed in one side of each elastic apparatus, and a slide groove is formed in the other side of each elastic apparatus, so the elastic bodies slide and are engaged.

8. The module of claim 7, wherein a fixture is formed in each elastic body for a rotatable engagement with the engaging part and the fixing plate, and said fixture is formed in an upper most portion or a lower most portion of each elastic body in the whole rotation sections of the elastic apparatuses.

9. The module of claim 8, wherein said spring is a coil spring and is divided into two parts with respect to the support frame, and said support frame includes a boundary part which defines a boundary of the divided springs, and a support rod which is longitudinally extended in a slide direction of the elastic bodies from the both sides of the boundary part and which is inserted into the spring for supporting the same.
